Europäisches Patentamt

European Patent Office

Office européen des brevets

(19)

(11) **EP 1 221 207 B1**

(12) **FASCICULE DE BREVET EUROPEEN**

(45) Date de publication et mention
de la délivrance du brevet:
**19.10.2005 Bulletin 2005/42**

(21) Numéro de dépôt: **01967411.8**

(22) Date de dépôt: **31.08.2001**

(51) Int Cl.$^7$: **H04B 1/707**

(86) Numéro de dépôt international:
**PCT/FR2001/002718**

(87) Numéro de publication internationale:
**WO 2002/019558 (07.03.2002 Gazette 2002/10)**

(54) **PROCEDE ET DISPOSITIF POUR ORDONNER DES SIGNAUX PROVENANT DE MULTI-UTILISATEURS**

VERFAHREN UND VORRICHTUNG ZUM ORDNEN VON MEHRBENUTZERSIGNALEN

METHOD AND DEVICE FOR SEQUENCING SIGNALS FROM MULTIUSERS

(84) Etats contractants désignés:
**AT BE CH CY DE DK ES FI FR GB GR IE IT LI LU
MC NL PT SE TR**

(30) Priorité: **01.09.2000 FR 0011200**

(43) Date de publication de la demande:
**10.07.2002 Bulletin 2002/28**

(73) Titulaire: **Thales**
**75008 Paris (FR)**

(72) Inventeurs:
• **ROUMY, Aline, THALES Intellectual Property**
**F-94117 Arcueil Cedex (FR)**
• **PIREZ, Didier, THALES Intellectual Property**
**F-94117 Arcueil Cedex (FR)**
• **FIJALKOW, Inbar, THALES Intellectual Property**
**F-94117 Arcueil Cedex (FR)**

(74) Mandataire: **Dudouit, Isabelle**
**THALES Intellectual Property,**
**31-33 avenue Aristide Briand**
**94117 Arcueil Cedex (FR)**

(56) Documents cités:
**US-A- 5 414 699**

• **DUEL-HALLEN A: "A FAMILY OF MULTIUSER
DECISION-FEEDBACK DETECTORS FOR
ASYNCHRONOUS CODE-DIVISION
MULTIPLE-ACCESS CHANNELS" IEEE
TRANSACTIONS ON
COMMUNICATIONS,US,IEEE INC. NEW YORK,
vol. 43, no. 2/04, PART 01, 1 février 1995
(1995-02-01), pages 421-434, XP000506554 ISSN:
0090-6778**
• **KLEIN A ET AL: "ZERO FORCING AND MINIMUM
MEAN-SQUARE-ERROR EQUALIZATION FOR
MULTIUSER DETECTION IN CODE-DIVISION
MULTIPLE-ACCESS CHANNELS" IEEE
TRANSACTIONS ON VEHICULAR
TECHNOLOGY,US,IEEE INC. NEW YORK, vol.
45, no. 2, 1 mai 1996 (1996-05-01), pages 276-287,
XP000598095 ISSN: 0018-9545**

**Description**

Le domaine de l'invention est celui de la transmission et de la diffusion de signaux numérique en particulier en présence de bruits de transmission.

L'invention concerne un procédé permettant d'ordonner les utilisateurs au niveau d'un récepteur comportant un égaliseur et un décodeur avant de procéder au traitement du signal.

L'invention s'applique dans un contexte CDMA ( abréviation de code division multiple access) avec codage de canal.

Elle s'applique en particulier pour les systèmes radio-mobiles de troisième génération.

En transmission numérique, un récepteur peut être vu comme une succession de plusieurs fonctions élémentaires, chacune réalisant un traitement spécifique tels que le filtrage, la démodulation, l'égalisation, le décodage,... etc.

La technique CDMA est une technique d'accès multiple qui sera à la base des systèmes radio-mobiles de troisième génération.

La technique est basée sur le principe de l'étalement de spectre : la transmission s'effectue à un débit beaucoup plus élevé que nécessaire pour chaque utilisateur, en multipliant les symboles utiles par des séquences de symboles à haut débit, dites « séquences d'étalement ».

Toutes les transmissions s'effectuent ensuite à la même fréquence et aux mêmes instants, la séparation entre les utilisateurs étant obtenue par des séquences d'étalement différentes.

L'art antérieur décrit des récepteurs qui font appel à des soustractions successives d'interférence afin d'ordonner les utilisateurs selon des critères spécifiques.

Par exemple une méthode consiste à classer les utilisateurs en fonction uniquement de la puissance liée à un utilisateur. Une telle méthode est illustrée dans le document: "A FAMILY OF MULTIUSER DECISION - FEEDBACK DETECTORS FOR ASYNCHRONOUS CODE-DIVISION MULTIPLE-ACCESS CHANNELS"; Duel-Hallen A., IEEE Transactions on Communications, US, IEEE INC. New York, vol. 43, no. 2/04, Part 01, 1 février 1995, pages 421-434.

La présente invention propose une nouvelle méthode permettant notamment d'ordonner les K utilisateurs selon un critère qui tient compte de la puissance liée à un utilisateur corrigée de la contribution des interférences intersymboles liées à cet utilisateur et aussi aux autres utilisateurs.

L'invention concerne aussi un procédé et un récepteur où les utilisateurs sont traités les uns après les autres, une démodulation étant suivie d'un décodage d'erreurs.

L'invention concerne un procédé pour ordonner un nombre K d'utilisateurs donnés dans un dispositif d'égalisation et de décodage de signaux numériques recevant les signaux des K utilisateurs.

Il est caractérisé en ce qu'il comporte au moins les étapes suivantes :

- une étape où les K utilisateurs ou au moins la majorité de K utilisateurs sont ordonnés selon un critère déterminé pour un utilisateur k en tenant compte de la puissance de l'utilisateur k corrigée de la contribution des interférences intersymboles liés à cet utilisateur k et aux autres utilisateurs, et
- une étape d'égalisation et de décodage.

Le critère pour ordonner les utilisateurs est déterminé par exemple de la manière suivante :

$$C_k = \sum_{n=1}^{N} \left( h_{k,n}{}^\dagger h_{k,n} - \sum_{m \neq n} \left| h_{k,n}{}^\dagger h_{k,m} \right| - \sum_{j \neq k} \sum_{m} \left| h_{k,n}{}^\dagger h_{j,m} \right| \right)$$

où $h_{kl}$ désigne la lième colonne d'une matrice $H_k$ construite à partir du vecteur contenant les échantillons du signal de l'utilisateur k, n l'indice temporel du symbole codé.

L'étape d'égalisation et de décodage peut comporter au moins les étapes suivantes :

a) à l'itération 1, pour l'utilisateur d'indice 1 transmettre le signal à démoduler à un égaliseur de rang 1 puis à un décodeur de rang 1 afin d'obtenir des informations des symboles modulés estimés issus d'au moins un des décodeurs de rang (k-1), et

b) pour les utilisateurs k d'indice différent de 1, transmettre le signal à démoduler à un égaliseur de rang k et les différents symboles modulés estimés issus d'au moins un des décodeurs de rang (k-1).

L'invention concerne aussi un dispositif permettant de mettre dans un ordre donné les signaux reçus de plusieurs utilisateurs avant de procéder au traitement des signaux dans un dispositif de décodage des signaux. Il est caractérisé en ce qu'il comporte au moins un dispositif adapté à déterminer un critère pour ordonner les signaux des utilisateurs, le critère tenant compte de la puissance d'un utilisateur donné k et des interférences intersymboles pour l'utilisateur k lui-même et pour les autres utilisateurs.

Le dispositif peut comporter K modules, chaque module comportant au moins un égaliseur en liaison avec un décodeur et en ce qu'un égaliseur d'indice k est relié à plusieurs décodeurs d'indice inférieur 1 à k-1.

Un égaliseur d'un module comporte par exemple au moins un premier bloc qui reçoit au moins le signal à démoduler de l'utilisateur k et les estimées des symboles associés aux utilisateurs 1 à k-1 et un deuxième bloc adapté à retrancher la contribution des symboles passés déjà démodulés.

Le procédé et le dispositif selon l'invention s'appliquent par exemple pour démoduler un signal dans un cadre d'accès multiple à répartition spatiale et/ou une répartition par codes de type CDMA.

D'autres avantages et caractéristiques de l'invention apparaîtront mieux à la lecture de la description donnée à titre illustratif et nullement limitatif en regard des figures où :

- la figure 1 représente une chaîne de codage,
- la figure 2 est un schéma général d'un récepteur de traitement de signaux,
- la figure 3 une matrice permettant de modéliser le signal reçu,
- la figure 4 représente une structure spécifique d'un récepteur selon l'invention,
- la figure 5 représente un exemple de structure de l'égaliseur utilisé dans le procédé selon l'invention, et
- la figure 6 une autre variante de mise en oeuvre de l'invention.

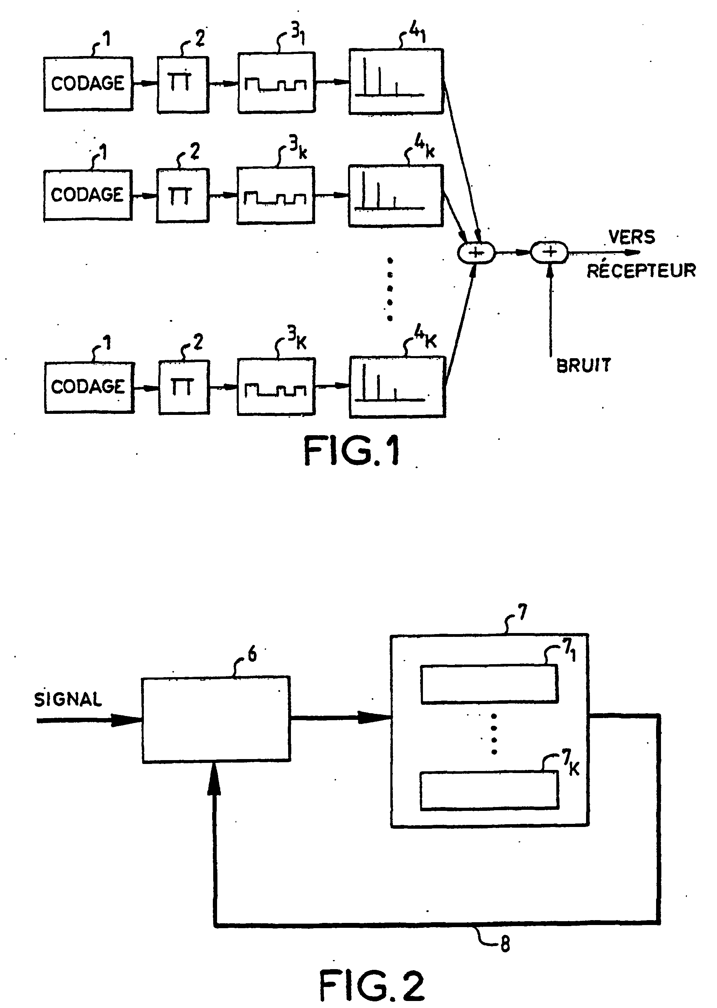

La figure 1 représente une chaîne de codage des signaux émis par K utilisateurs qui se partagent un même canal de propagation et qui utilisent des formes d'onde spectralement étalées à l'aide de codes, chaque utilisateur désigné par k avec k variant de 1 à K possède son propre code. Les utilisateurs sont considérés comme des utilisateurs asynchrones qui accèdent à un même canal de propagation sélectif en fréquence pour transmettre l'information.

Le signal numérique associé à l'utilisateur k est codé à l'aide d'un code correcteur 1 avant d'être transmis à un entrelaceur 2. Ces deux blocs fonctionnels peuvent être identiques ou bien différents pour chaque utilisateur k. Le code correcteur est par exemple de type convolutionnel, sans obligation toutefois.

Le signal codé est ensuite « étalé » à l'aide d'une séquence d'étalement $3_k$, l'indice k permet de désigner la séquence d'étalement spécifique pour chaque utilisateur k. Les séquences d'étalement différentes pour chaque utilisateur assurent ainsi la discrimination entre eux. Un signal modulé va voir un canal de propagation $4_k$ différent pour chaque utilisateur. Ceci correspond par exemple typiquement à la liaison montante d'un système radiomobile cellulaire. La notion de canal de propagation intègre par exemple les décalages temporels éventuels résultant d'une absence de synchronisation entre les K utilisateurs.

Le récepteur voit Ja somme des différentes contributions des signaux issus des différents canaux de propagation. A ces signaux peut s'ajouter du bruit thermique lié aux étages d'entrée du récepteur décrit ci-après ou encore de l'interférence provenant de signaux émis dans la même bande, par exemple les mobiles de cellules voisines utilisant la même fréquence.

Pour des raisons de simplification dans la description, les opérations de modulation, typiquement la mise en forme par un demi-filtre de Nyquist et la transmission par porteuse, qui sont connues de l'Homme du métier ne sont pas représentées sur la figure 1.

La figure 2 montre un schéma très général d'un récepteur.

Le signal composé de l'ensemble des symboles de tous les K utilisateurs arrive dans un égaliseur multi utilisateurs 6 avant d'être transmis dans un dispositif de décodage 7 comportant un ou plusieurs décodeurs $7_k$.

L'égaliseur 6 reçoit le signal des différents utilisateurs ainsi que des informations fournies par le bloc de décodage 7 sur les symboles codés par l'intermédiaire d'une liaison 8, excepté lorsque aucun décodage n'a été effectué. L'égaliseur 6 fournit en sortie des informations pondérées sur les symboles codés qui exploitent ces deux types d'information, typiquement les probabilités d'émission des différents symboles possibles.

Les fonctions de désentrelacement et de mise en forme des informations pondérées entre l'égaliseur et les décodeurs ne sont pas représentés sur la figure. Elles permettent par exemple de traduire les informations sur les symboles 8-aires en probabilités sur les bits dans le cas où la modulation est à 8 états et le code binaire.

Le ou les décodeurs $7_k$ reçoivent les informations de l'égaliseur et exploitent les informations liées au code correcteur d'erreurs afin de fournir des informations plus fiables sur les symboles utiles et donc les symboles codés. Par exemple pour un code convolutionnel, le décodeur peut être du type « MAP » (maximum a posteriori) et calcule les probabilités sur les symboles utiles à partir de la connaissance des probabilités sur les symboles codés.

Les informations pondérées sont ensuite réentrelacées et remises en forme pour être réinjectées dans le bloc « égaliseur ». L'étape d'entrelacement des données s'effectue selon une méthode connue de l'Homme du métier et ne sera pas détaillée dans cette description. Une façon de procéder consiste par exemple à écrire les données colonne par colonne dans une matrice de dimension appropriée et de lire cette matrice ligne par ligne par exemple. Ceci permet avantageusement de répartir les erreurs éventuelles lors de l'étape de lecture du signal. La mise en forme s'effectue selon des méthodes classiques et connues de l'Homme du métier, ce qui explique pourquoi elles ne sont pas détaillées.

Le signal reçu par l'égaliseur peut être modélisé de la manière suivante décrite ci-après.

On suppose qu'un bloc d'échantillons reçus peut être rangé sous une forme vectorielle Z. Ce bloc d'échantillons est issu de la contribution des K utilisateurs, chacun d'eux contribuant avec N symboles codés. La contribution d'un utilisateur d'indice k quelconque au signal reçu s'obtient, sans prendre en compte les opérations de modulation sur porteuse, par les opérations suivantes :

- étalement d'un facteur Q de chaque symbole codé,
- mise en forme, par exemple par un demi-filtre de Nyquist,
- filtrage par le canal de propagation par introduction de trajets multiples par exemple,
- filtrage anti-repliement en réception, et
- échantillonnage.

Le signal de l'utilisateur k avant échantillonnage s'écrit par exemple selon l'équation (1) suivante :

$$z_k(t) = \sum_n a_{n,k} \sum_{q=1}^{Q} c_{q,k} \cdot (h \otimes p_k \otimes f)(t - qT_c - nT_s) \qquad (1)$$

Dans cette équation h représente le filtre de mise en forme à l'émission, $p_k(t)$ le canal de propagation spécifique à un utilisateur k, f(t) le filtre de réception avant échantillonnage, $T_c$ la période chip inverse de la vitesse de modulation et $T_s$ la période symbole avant étalement. Les symboles $a_{n,k}$ sont les symboles codés de l'utilisateur k et les symboles $c_{q,k}$ sont les chips de la séquence d'étalement, n l'indice temporel du symbole codé et q l'indice des chips ou symboles de la séquence d'étalement. Le symbole

$$\otimes$$

représente la convolution.

Si on pose

$$s_k(t) = \sum_{q=1}^{Q} c_{q,k} \cdot (h \otimes p_k \otimes f)(t - qT_c) \qquad (2)$$

On peut écrire

$$z_k(t) = \sum_n a_{n,k} s_k(t - nT_s) \qquad (3)$$

L'équation (3) montre que la contribution de chaque utilisateur k peut se mettre sous la forme du filtrage d'un train de symboles par une certaine fonction $s_k(t)$ qui contient les effets de l'étalement, du filtre de mise en forme à l'émission, de la propagation et des filtres de réception avant l'échantillonnage.

Si on appelle $S_k$ le vecteur contenant les échantillons de $s_k(t)$, on peut réécrire le signal échantillonné pour l'utilisateur k de la manière suivante :

$$Z_k = H_k \cdot A_k \qquad (4)$$

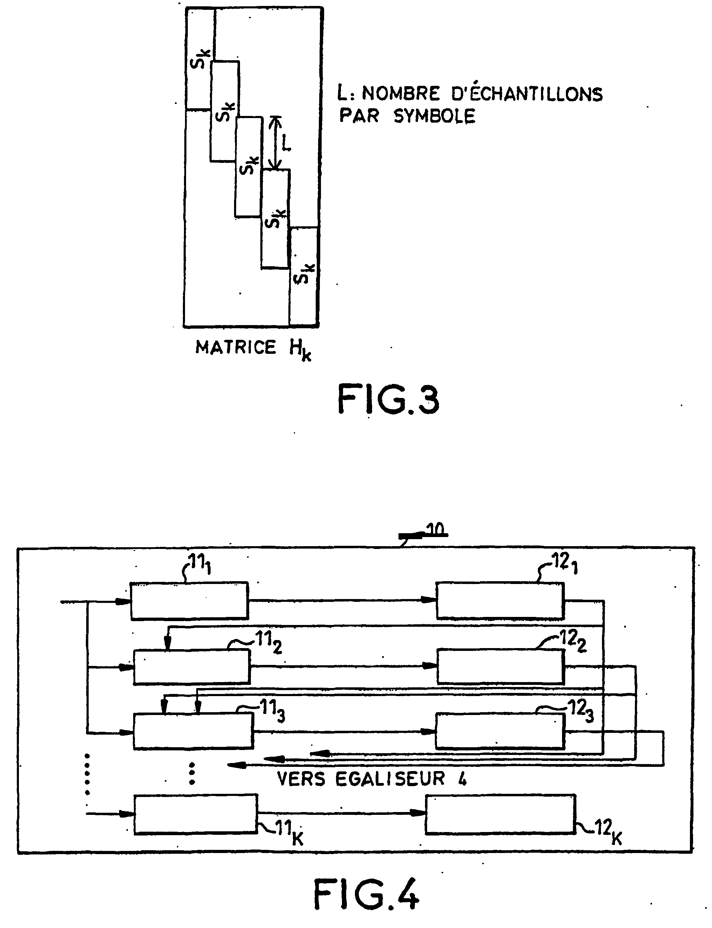

Où $A_k$ est le vecteur des N symboles $a_{n,k}$ et $H_k$ une matrice construite à partir du vecteur Sk de la manière décrite à la figure 4.

Les colonnes de la matrice $H_k$ sont construites à partir de versions décalées de la séquence $S_k$, chaque colonne correspond à un nouveau symbole du vecteur $A_k$ et le décalage correspond au nombre d'échantillons par symbole. Le recouvrement entre les différentes versions décalées de $S_k$ correspond à la durée de la réponse impulsionnelle globale (filtres plus canal de propagation).

Le modèle complet peut donc s'écrire :

$$Z = \sum_{k=1}^{K} H_k A_k + W \qquad (5)$$

Dans cette équation (5), W est un vecteur de bruit lié aux interférences extérieures à la cellule et au bruit interne du récepteur.

**Critère pour ordonner les utilisateurs avant le traitement de signal**

Les différentes étapes d'égalisation et de décodage peuvent avantageusement être apliquées sur un ensemble d'utilisateurs qui sont ordonnés selon un critère tenant compte de la puissance liée à un utilisateur à laquelle est retranchée la contribution des interférences intersymboles pour ce même utilisateur et pour les autres utilisateurs.

Ce critère est déterminé par exemple de la manière suivante :

- $h_{kl}$ désigne la lième colonne de la matrice $H_k$ décrite en relation avec la figure 3. Ce vecteur désigne en fait la réponse impulsionnelle globale du canal pour le lième symbole du bloc à démoduler de l'utilisateur k,
- le critère $C_k$ est déterminé de la manière suivante :

$$C_k = \sum_{n=1}^{N} \left( h_{k,n}{}^{\dagger} h_{k,n} - \sum_{m \neq n} \left| h_{k,n}{}^{\dagger} h_{k,m} \right| - \sum_{j \neq k} \sum_{m} \left| h_{k,n}{}^{\dagger} h_{j,m} \right| \right)$$

où le symbole † désigne le conjugué transposé

le premier terme correspond à la puissance liée à l'utilisateur k, le deuxième terme la contribution de l'utilisateur et le troisième terme la contribution aux interférences intersymboles pour tous les autres utilisateurs.

Ce calcul fait intervenir les corrélations entre les signaux correspondant aux différents symboles qu'ils soient émis par l'utilisateur k lui-même ou par les autres.

En fait la méthode mesure la distance existante au minimum entre deux symboles opposés en sortie d'un filtre adapté à la réponse impulsionnelle $h_{kn}$, quelles que soient les valeurs des autres symboles qui interférent.

Les utilisateurs sont rangés dans un ordre décroissant avant de mettre les étapes du procédé selon l'invention.

La figure 4 représente une structure de récepteur 10 selon l'invention comportant plusieurs égaliseurs $11_k$ et plusieurs décodeurs $12_k$, l'indice $_k$ permet d'identifier un utilisateur. Le récepteur comporte donc autant de module formé d'un égaliseur et d'un décodeur qu'il n'y a d'utilisateurs.

Le signal comportant les symboles de tous les utilisateurs est reçu par chaque égaliseur $11_k$ du récepteur 10.

Etape a)

L'égaliseur de rang 1 référencé $11_1$ reçoit par exemple les échantillons du signal à décoder, sans information à priori sur ses propres symboles ou sur les symboles des autres utilisateurs. L'information issue de cette première égalisation est transmise au décodeur de rang 1 désigné par $12_1$ qui fournit une information plus fiable sur les symboles utiles et donc les symboles modulés de l'utilisateur.

Etape b)

L'information fiable sur les symboles utiles obtenue pour l'utilisateur 1 est ensuite transmise à l'égaliseur de rang 2, $11_2$, qui reçoit aussi les échantillons du signal reçu à décoder. L'égaliseur permet ainsi de tenir compte de l'interférence liée à l'utilisateur de rang 1, tout en ne connaissant toujours rien à priori sur les symboles des utilisateurs de rang supérieur ou égal à 2. L'information de cette deuxième égalisation est ensuite transmise au décodeur de rang 2, $12_2$, qui va fournir des informations sur les symboles utiles de l'utilisateur de rang 2.

L'étape b) est exécutée autant de fois qu'il y a d'utilisateurs de rang différent de 1, donc K-1 fois.

En généralisant, pour l'utilisateur d'indice k, les échantillons du signal sont transmis à l'égaliseur de rang k, $11_k$, qui reçoit aussi les symboles utiles sur les utilisateurs de rang 1 à k-1, issus des différents décodeurs $12_1$,..., $12_{k-1}$. L'égaliseur permet ainsi de tenir compte des interférences liées aux utilisateurs de rang 1 à (k-1) pour le décodage du signal lié à l'utilisateur k. L'information de cette kème égalisation est ensuite transmise au décodeur de rang k, $12_k$, qui va fournir des informations sur les symboles utiles de l'utilisateur de rang k.

Le dernier égaliseur possède des informations sur tous les autres utilisateurs.

Selon une variante de réalisation de l'invention, l'égaliseur utilisé présente une structure en deux parties. La première partie permet de soustraire pour un utilisateur k considéré, la participation des utilisateurs de rang 1 à k-1 et la deuxième partie correspond à une structure d'égaliseur à décision dans la boucle, en anglais DFE abréviation de « Decision Feedback Equaliser » présentant des caractéristiques données ci-après.

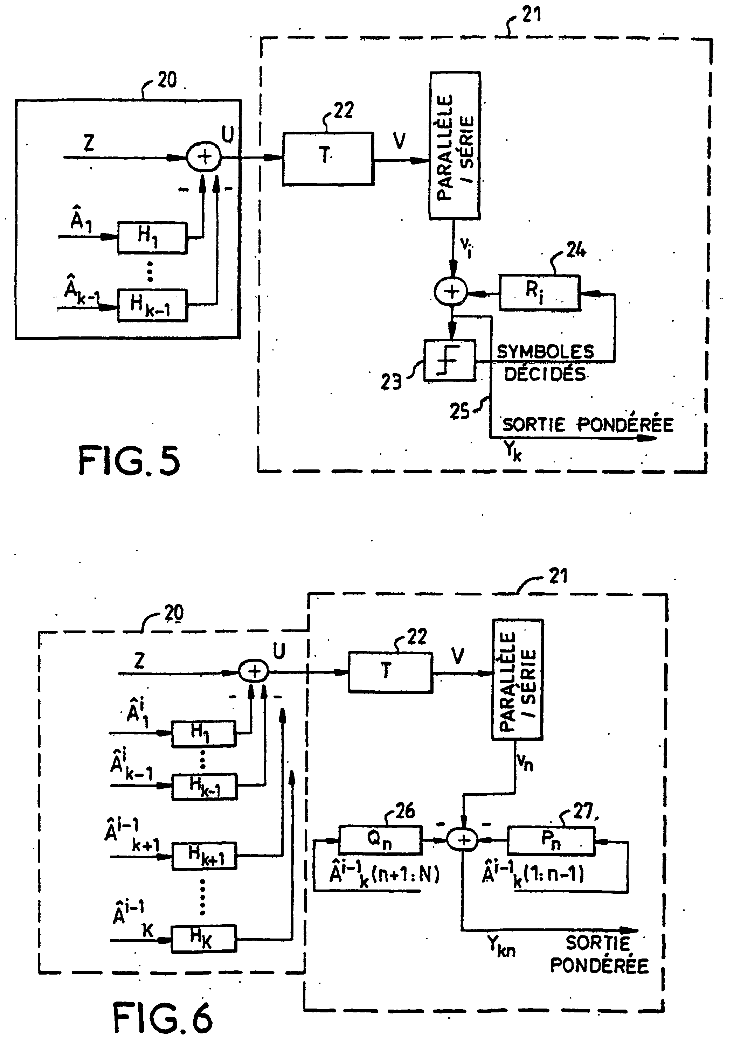

La figure 5 montre la structure d'un égaliseur fonctionnant en utilisant le principe de rebouclage décrit précédemment en relation avec la figure 4.

Lors de l'égalisation de l'utilisateur k, le premier bloc 20 a pour fonction de retrancher du signal reçu Z les contributions des utilisateurs d'indices compris entre 1 et k-1, c'est-à-dire des utilisateurs déjà traités. Pour ce faire il reçoit les vecteurs de symboles estimés correspondant à ces utilisateurs. L'estimée des symboles est effectuée par exemple en calculant l'espérance mathématique de la valeur du symbole à partir des probabilités obtenues lors des étapes de décodage.

Le deuxième bloc 21 a pour fonction de traiter l'interférence inter-symbole correspondant aux symboles de l'utilisateur k lui-même, et le bruit résultant des utilisateurs d'indices k+1 à K non encore traités et du bruit thermique. L'égaliseur a une structure DFE, c'est-à-dire qu'il est composé d'une partie "filtre transverse" et d'une partie "décision dans la boucle". La partie "filtre transverse" est calculée en prenant en compte la connaissance que l'on a de la structure du bruit généré par les utilisateurs non encore traités et par le bruit thermique. La partie "décision dans la boucle" a un fonctionnement séquentiel. Pour chaque symbole d'indice n de l'utilisateur courant, elle retranche la contribution des symboles d'indice inférieur déjà décidés.

Le deuxième bloc selon l'invention comporte par exemple un filtre transverse 22 telle qu'une matrice s'appliquant sur le vecteur U, le vecteur V résultant est échantillonné au rythme symbole. Les coordonnées $v_i$ de ce vecteur sont ensuite passées dans une boucle comportant un organe de décision 23 et un filtre récursif 24. L'organe de décision permet d'obtenir une décision sur les symboles. A chaque nouveau symbole le filtre récursif 24 retranche la contribution des symboles déjà décidés dans le bloc et renvoyés. La boucle comporte aussi une sortie pondérée 25 avant l'organe de décision qui permet de transmettre des symboles au décodeur.

Le calcul des filtres transverse 22 et récursif 24 s'effectue par exemple de la manière décrite ci-après.

Le calcul des filtres utilise comme critère la minimisation de l'erreur quadratique moyenne entre la sortie pondérée de l'égaliseur et le vecteur de symboles de l'utilisateur k

$$min(E(\|Y_k - A_k\|^2)) \tag{6}$$

En reprenant l'équation (5), le vecteur U peut s'écrire de la manière suivante

$$U = H_k A_k + B$$
$$B = \sum_{l=k+1}^{K} H_l A_l + W \tag{7}$$

Dans cette équation (7), le bruit est constitué des signaux émis par les utilisateurs non encore décodés de rang k+1 à K et du bruit additif initial W.

Pour un bruit blanc W, les expressions des filtres sont données ci-dessous :
La matrice de corrélation de B s'écrit

$$R_B = \sigma_A{}^2 \cdot \sum_{l=k+1}^{K} H_l H_l{}^\dagger + \sigma_W{}^2 \cdot Id \qquad (8)$$

Avec $\sigma_A{}^2$ la puissance des symboles de modulation, $\sigma_W{}^2$ la puissance du bruit et Id la matrice identité

• on définit la matrice Q par

$$Q = H_k{}^\dagger R_B^{-1} H_k + \frac{1}{\sigma_W{}^2} Id \qquad (9)$$

• on réalise la composition de Cholesky de cette matrice

$$Q = (\Sigma L)^\dagger (\Sigma L) \qquad (10)$$

dans l'équation (10), $\Sigma$ est une matrice diagonale et L une matrice triangulaire inférieure.

L'expression du filtre transverse qui minimise le critère (6) est

$$T = \Sigma^{-2} L^{-1\dagger} H_k{}^\dagger R_B^{-1} \qquad (11)$$

Le filtre récursif est déterminé par les lignes de (L-Id).

Selon un mode de réalisation de l'invention, le dispositif utilise un annuleur d'interférences lorsque l'ensemble des symboles à démoduler a fait l'objet d'au moins un décodage. Dans cette situation, à la différence de l'égaliseur à décision dans la boucle, lorsque l'on cherche à décider le symbole j de l'utilisateur k, l'ensemble des autres symboles du même utilisateur ou des autres utilisateurs peuvent être considérés comme connus, même si dans la pratique seules les estimées de ces symboles sont connues. Il est alors possible de retrancher totalement leur contribution.

La figure 6 schématise le principe de cet annuleur.

Par rapport au cas de l'égaliseur à décision dans la boucle de la figure 5, on dispose de plus d'informations sur tous les symboles provenant de l'itération i-1 pour certains utilisateurs, par exemple ceux d'indice 1 à k-1 et de l'itération i courante pour les d'autres utilisateurs d'indice k+1 à K.

Le principe mis en oeuvre consiste à :

• retrancher les contributions de tous les utilisateurs autres que l'utilisateur k en train d'être traité, en utilisant l'information la plus récente pour chacun d'eux, pour les utilisateurs d'indice 1 à k-1 les estimées des vecteurs des symboles lors de l'itération i et pour les utilisateurs d'indice k+1 à K l'information les estimées obtenues lors de l'itération (i-1), ceci étant réalisé dans le premier bloc 20 qui génère un vecteur U,
• filtrer les échantillons reçus pour l'utilisateur k dans le filtre T 22, le vecteur V résultant est ensuite échantillonné par exemple au rythme symbole,
• retrancher dans le deuxième bloc 21, pour un symbole n donné l'interférence inter-symbole résiduelle provenant des autres symboles de l'utilisateur k. La contribution des symboles 1 à n-1 sont déterminés par le filtre $P_n$, 26 et celle des symboles d'indice n+1 à N par un filtre $Q_n$, 27.

De cette façon par rapport à la boucle de décision, on dispose d'une information beaucoup plus riche que les symboles décidés précédents, à savoir des informations sur les symboles passés mais aussi futurs provenant de l'itération précédente.

Après les étapes de traitement, on passe à l'étape de décodage, puis on considère l'utilisateur suivant et la contribution de l'utilisateur k est retranchée en utilisant les résultats obtenus au cours de l'itération i et non plus i-1.

**Revendications**

1. Procédé pour ordonner un nombre K d'utilisateurs donnés dans un dispositif d'égalisation et de décodage de signaux numériques recevant les signaux des K utilisateurs **caractérisé en ce qu'**il comporte au moins les étapes suivantes :

   - une étape où les K utilisateurs ou au moins la majorité de K utilisateurs sont ordonnés selon un critère déterminé pour un utilisateur k en tenant compte de la puissance de l'utilisateur k corrigée de la contribution des interférences intersymboles liés à cet utilisateur k et aux autres utilisateurs, et
   - une étape d'égalisation et de décodage.

2. Procédé selon la revendication 1 **caractérisé en ce que** le critère pour ordonner les utilisateurs est déterminé de la manière suivante

$$C_k = \sum_{n=1}^{N} \left( h_{k,n}{}^{\dagger} h_{k,n} - \sum_{m \neq n} |h_{k,n}{}^{\dagger} h_{k,m}| - \sum_{j \neq k} \sum_{m} |h_{k,n}{}^{\dagger} h_{j,m}| \right)$$

où $h_{kl}$ désigne la lième colonne d'une matrice $H_k$ construite à partir du vecteur contenant les échantillons du signal de l'utilisateur k, n l'indice temporel du symbole codé.

3. Procédé selon l'une des revendications 1 et 2 **caractérisé en ce que** l'étape d'égalisation et de décodage comporte au moins les étapes suivantes

   a) à l'itération 1, pour l'utilisateur d'indice 1 transmettre le signal à démoduler à un égaliseur de rang 1 puis à un décodeur de rang 1 afin d'obtenir des informations des symboles modulés estimés issus d'au moins un des décodeurs de rang (k-1), et
   b) pour les utilisateurs k d'indice différent de 1, transmettre le signal à démoduler à un égaliseur de rang k et les différents symboles modulés estimés issus d'au moins un des décodeurs de rang (k-1).

4. Procédé selon l'une des revendications 1 à 3 **caractérisé en ce qu'**il comporte plusieurs itérations et **en ce que** pour une itération différente de la première itération, l'étape b) consiste au cours d'une ième itération à transmettre à un premier bloc de l'égaliseur de rang k les symboles de l'utilisateur k à démoduler, les estimées des symboles des utilisateurs 1 à k-1 obtenues au cours de la ième itération et les estimées de utilisateurs k+1 à K obtenus au cours de l'itération i-1 et les estimées des symboles de l'utilisateur k issues de la (i-1)ième itération.

5. Dispositif permettant de mettre dans un ordre donné les signaux reçus de plusieurs utilisateurs avant de procéder au traitement des signaux dans un dispositif de décodage des signaux **caractérisé en ce qu'**il comporte au moins un dispositif adapté à déterminer un critère pour ordonner les signaux des utilisateurs, le critère tenant compte de la puissance d'un utilisateur donné k et des interférences intersymboles pour l'utilisateur k lui-même et pour les autres utilisateurs.

6. Dispositif selon la revendication 5 **caractérisé en ce qu'**il comporte K module chaque module comportant au moins un égaliseur en liaison avec un décodeur et **en ce qu'**un égaliseur d'indice k est relié à plusieurs décodeurs d'indice inférieur 1 à k-1.

7. Dispositif selon l'une des revendications 5 et 6 **caractérisé en ce qu'**un égaliseur comporte au moins deux blocs (20) et (21), le premier bloc (20) reçoit au moins le signal à démoduler de l'utilisateur k et les estimées des symboles associés aux utilisateurs 1 à k-1 et le deuxième bloc (21) est adapté à retrancher la contribution des symboles passés déjà démodulés.

8. Dispositif selon l'une des revendications 5 à 7 **caractérisé en ce que** le premier bloc (20) reçoit à une ième itération, au moins le signal de l'utilisateur k à démoduler, au moins les estimées des symboles associés aux utilisateurs 1 à k-1 correspondant à la ième itération et les estimées des symboles des utilisateurs k+1 à K obtenues à la (i-1)ième itération et le deuxième bloc les estimées des symboles de l'utilisateur k obtenues à la (i-1)ième itération.

9. Utilisation du procédé selon l'une des revendications 1 à 4 et du dispositif selon l'une des revendications 5 à 8 pour démoduler un signal dans un cadre d'accès multiple à répartition spatiale et/ou une répartition par codes de type CDMA.

**Claims**

1. Method for ordering a number K of given users in a digital signal equalizing and decoding device receiving the signals from the K users, **characterized in that** it comprises at least the following steps:

   - a step in which the K users, or at least the majority of K users, are ordered according to a defined criterion for a user k taking account of the power of user k corrected for the contribution of the intersymbol interference associated with this user k and with other users, and
   - an equalizing and decoding step.

2. Method according to Claim 1, **characterized in that** the criterion for ordering the users is determined as follows

$$C_k = \sum_{n=1}^{N} \left( h_{k,n}{}^{\dagger} h_{k,n} - \sum_{m \neq n} \left| h_{k,n}{}^{\dagger} h_{k,m} \right| - \sum_{j \neq k} \sum_{m} \left| h_{k,n}{}^{\dagger} h_{j,m} \right| \right)$$

   where $h_{kl}$ denotes the lth column of a matrix $H_k$ constructed from the vector containing the samples of the signal of user k, and n denotes the temporal index of the coded symbol.

3. Method according to either of Claims 1 and 2, **characterized in that** the equalizing and decoding step comprises at least the following steps

   a) at iteration 1, for the user of index 1 to transmit the signal to be demodulated to an equalizer of rank 1 then to a decoder of rank 1 to obtain information from the estimated modulated symbols from at least one of the decoders of rank (k-1), and
   b) for users k of index different to 1, to transmit the signal to be demodulated to an equalizer of rank k and the various estimated modulated symbols from at least one of the decoders of rank (k-1).

4. Method according to one of Claims 1 to 3, **characterized in that** it comprises several iterations and **in that**, for an iteration different from the first iteration, step b) consists, during an ith iteration, in transmitting to a first block of the equalizer of rank k the symbols of user k to be demodulated, the estimates of the symbols of users 1 to k-1 obtained during the ith iteration and the estimates of the symbols of users k+1 to K obtained during the i-1 iteration and the estimates of the symbols of user k from the (i-1)th iteration.

5. Device for putting the signals received from several users into a given order before the signals are processed in a signal decoding device, **characterized in that** it comprises at least a device suitable for determining a criterion for ordering the signals from users, the criterion taking into account the power of a given user k and of intersymbol interference for user k himself and for the other users.

6. Device according to Claim 5, **characterized in that** it comprises K modules, each module having at least one equalizer linked to a decoder and **in that** an equalizer of index k is linked to several decoders of lower index 1 to k-1.

7. Device according to either of Claims 5 and 6, **characterized in that** an equalizer comprises at least two blocks (20) and (21), the first block (20) receives at least the signal to be demodulated, from user k, and the estimates of the symbols associated with users 1 to k-1 and the second block (21) is designed to subtract the contribution from past symbols already demodulated.

8. Device according to one of Claims 5 to 7, **characterized in that** the first block (20) receives, at an ith iteration, at least the signal from user k to be demodulated, at least the estimates of the symbols associated with users 1 to k-1 corresponding to the ith iteration and the estimates of the symbols of users k+1 to K which are obtained at the (i-1)th iteration and the second block receives the estimates of the symbols of user k which are obtained at the (i-1)th iteration.

9.  Use of the method according to one of Claims 1 to 4 and of the device according to one of Claims 5 to 8 to demodulate a signal in the context of a space division and/or a CDMA-type code division multiple access scheme.

**Patentansprüche**

1.  Verfahren zum Anordnen einer Anzahl K von gegebenen Benutzern in einer Entzerrungs- und Decodiervorrichtung für digitale Signale, die die Signale der K Benutzer empfängt, **dadurch gekennzeichnet, dass** es mindestens die folgenden Schritte aufweist:

    *   einen Schritt, in dem die K Benutzer oder zumindest die meisten der K Benutzer gemäß einem für einen Benutzer k bestimmten Kriterium unter Berücksichtigung der Leistung des Benutzers k korrigiert um den Beitrag der mit diesem Benutzer k und mit den anderen Benutzern verbundenen Intersymbolinterferenzen geordnet werden, und
    *   einen Schritt der Entzerrung und der Decodierung.

2.  Verfahren nach Anspruch 1, **dadurch gekennzeichnet, dass** das Kriterium zum Ordnen der Benutzer folgendermaßen bestimmt wird

$$C_k \; = \; \sum_{n=1}^{N} \left( h_{k,n}{}^{t} h_{k,n} - \sum_{m \neq n} \left| h_{k,n}{}^{t} h_{k,m} \right| - \sum_{j \neq k} \sum_{m} \left| h_{k,n}{}^{t} h_{j,m} \right| \right)$$

wobei $h_{kl}$ die 1-te Spalte einer Matrix $H_k$, die ausgehend von dem Vektor konstruiert wird, der die Tastproben des Signals des Benutzers k enthält, und n den Zeitindex des codierten Symbols bezeichnet.

3.  Verfahren nach einem der Ansprüche 1 und 2,
    **dadurch gekennzeichnet, dass** der Schritt der Entzerrung und Decodierung mindestens die folgenden Schritte aufweist

    a) bei der Iteration 1, für den Benutzer mit dem Index 1, die Übertragung des zu demodulierenden Signals an einen Entzerrer des Rangs 1 und dann an einen Decoder des Rangs 1, um Informationen über die geschätzten modulierten Symbole zu erhalten, die von mindestens einem der Decoder des Rangs (k-1) stammen, und
    b) für die Benutzer k mit einem anderen Index als 1, die Übertragung des zu demodulierenden Signals an einen Entzerrer des Rangs k und der verschiedenen geschätzten modulierten Symbole, die von mindestens einem der Decoder des Rangs (k-1) stammen.

4.  Verfahren nach einem der Ansprüche 1 bis 3, **dadurch gekennzeichnet, dass** es mehrere Iterationen umfasst und dass für eine von der ersten Iteration unterschiedliche Iteration der Schritt b) während einer i-ten Iteration darin besteht, an einem ersten Block des Entzerrers des Rangs k die zu demodulierenden Symbole des Benutzers k, die Schätzwerte der Symbole der Benutzer 1 bis k-1, die während der i-ten Iteration erhalten werden, und die Schätzwerte der Symbole der Benutzer k+1 bis K, die während der Iteration i-1 erhalten werden, sowie die Schätzwerte der Symbole des Benutzers k zu übertragen, die aus der (i-1)ten Iteration stammen.

5.  Vorrichtung, die es ermöglicht, die von mehreren Benutzern empfangenen Signale in eine gegebene Reihenfolge zu bringen, ehe die Signale in einer Signaldecodiervorrichtung verarbeitet werden, **dadurch gekennzeichnet, dass** sie mindestens eine Vorrichtung enthält, die in der Lage ist, ein Kriterium zum Ordnen der Signale der Benutzer zu bestimmen, wobei das Kriterium die Leistung eines gegebenen Benutzers k und Intersymbolinterferenzen für den Benutzer k selbst und für die anderen Benutzer berücksichtigt.

6.  Vorrichtung nach Anspruch 5, **dadurch gekennzeichnet, dass** sie K Module aufweist, wobei jeder Modul mindestens einen Entzerrer in Verbindung mit einem Decoder aufweist, und dass ein Entzerrer mit dem Index k mit mehreren Decodern mit einem Index geringer 1 als k-1 verbunden ist.

7. Vorrichtung nach einem der Ansprüche 5 und 6, **dadurch gekennzeichnet, dass** ein Entzerrer mindestens zwei Blöcke (20) und (21) aufweist, wobei der erste Block (20) mindestens das zu demodulierende Signal des Benutzers k und die Schätzwerte der den Benutzern 1 bis k-1 zugeordneten Symbole empfängt und der zweite Block (21) ausgelegt ist, um den Beitrag der vorherigen bereits demodulierten Symbole abzuziehen.

8. Vorrichtung nach einem der Ansprüche 5 bis 7, **dadurch gekennzeichnet, dass** der erste Block (20) bei einer i-ten Iteration mindestens das zu demodulierende Signal des Benutzers k, mindestens die Schätzwerte der den Benutzern 1 bis k-1 zugeordneten Symbole, die der i-ten Iteration entsprechen, und die Schätzwerte der Symbole der Benutzer k+1 bis K, die bei der (i-1)ten Iteration erhalten werden, und der zweite Block die Schätzwerte der Symbole des Benutzers k empfängt, die bei der (i-1)ten Iteration erhalten werden.

9. Verwendung des Verfahrens nach einem der Ansprüche 1 bis 4 und der Vorrichtung nach einem der Ansprüche 5 bis 8 zum Demodulieren eines Signals in einem Mehrfachzugriffsrahmen mit räumlicher Verteilung und/oder einer Verteilung gemäß Codes des Typs CDMA.

FIG.1

FIG.2

L: NOMBRE D'ÉCHANTILLONS
PAR SYMBOLE

MATRICE $H_k$

# FIG.3

VERS EGALISEUR 4

# FIG.4

FIG.5

FIG.6